# FASCICULE DE BREVET EUROPEEN

(11) **EP 3 755 925 B1**
(45) Date de publication et mention de la délivrance du brevet: **04.03.2026**
(21) Numéro de dépôt: 19719565.4
(22) Date de dépôt: 01.04.2019
(51) Int. Cl.: F16J 15/02, F16J 15/3228, F16J 15/3284, F16J 15/54, F16J 15/3276, F16J 15/08, F16K 41/16

(54) **ASSEMBLAGE D'ÉTANCHÉITÉ MÉTALLIQUE POUR L'ÉTANCHÉITÉ ENTRE UN ARBRE TOURNANT ET UN BÂTI FIXE**
METALLISCHE DICHTUNGSANORDNUNG ZUM ABDICHTEN ZWISCHEN EINER ROTIERENDEN WELLE UND EINEM FESTSTEHENDEN RAHMEN
METALLIC SEALING ASSEMBLY FOR SEALING BETWEEN A ROTATING SHAFT AND A FIXED FRAME

(30) Priorité: 04.04.2018 FR 1852925
(43) Date de publication de la demande: 30.12.2020
(73) Titulaire: Commissariat à l'Energie Atomique et aux Energies Alternatives, 75015 Paris (FR); Technetics Group France SAS, 42000 Saint-Etienne (FR)
(72) Inventeur: GUIMET, Laurent, 42240 UNIEUX (FR); JULIAA, Jean-François, 26200 MONTELIMAR (FR); LEFRANCOIS, Michel, 42000 SAINT ETIENNE (FR); DARLES, Christophe, 30200 VENEJAN (FR); CONSTANT, Olivier, 43110 AUREC SUR LOIRE (FR)
(74) Mandataire: Santarelli
(86) Numéro de dépôt international: PCT/FR2019/050752
(87) Numéro de publication internationale: WO 2019/193273

(56) Documents cités:
- CN-A- 102 853 093
- FR-A1- 2 331 725
- FR-A1- 2 398 940
- FR-A1- 2 496 217
- FR-A1- 2 615 580
- FR-A1- 2 721 085

## Description

### DOMAINE TECHNIQUE

La présente invention se rapporte au domaine des assemblages d'étanchéité métalliques dédiés à l'étanchéité des tiges tournantes.

Elle trouve des applications dans différents domaines de l'industrie, et avantageusement pour la réalisation de l'étanchéité vers l'extérieur des vannes à arbre tournant, et ce au niveau de la tige.

L'invention concerne ainsi un assemblage d'étanchéité métallique pour l'étanchéité entre un arbre tournant et un bâti fixe.

### ÉTAT DE LA TECHNIQUE ANTÉRIEURE

L'étanchéité des arbres tournants peut être réalisée de diverses manières. Sur des applications pour lesquelles les températures n'excèdent pas 250 à 300°C, de multiples solutions, comprenant des élastomères ou des polymères, existent et ont prouvé leur fiabilité.

Par contre, au-delà de ces températures, ou bien du fait du contact avec des éléments chimiques incompatibles avec ces élastomères ou polymères, on utilise régulièrement des systèmes de presse-étoupe, fréquemment à base de graphite, ou des garnitures mécaniques, dont les étanchéités secondaires sont d'ailleurs très souvent en graphite. Ces solutions, pratiques et parfois économiques, présentent néanmoins plusieurs inconvénients. Tout d'abord, leur performance en étanchéité reste limitée, le taux de fuite ne descendant pas en-dessous de 10⁻⁵ Pa.m³.s⁻¹, cette valeur étant un mieux-disant, à nuancer de surcroît selon les conditions de service précises. De même, il peut arriver que, malgré son très large spectre de compatibilité chimique, le graphite soit néanmoins incompatible avec le fluide à étancher. Par exemple, le graphite est incompatible avec le sodium liquide.

Aussi, dans le cas où l'utilisation du graphite, de polymères ou d'élastomères n'est pas possible, les solutions deviennent plus rares et parfois très spécifiques à l'application.

Par exemple, dans la demande de brevet français FR 2 541 416 A1, une solution est décrite pour justement pouvoir étancher du sodium liquide. Le principe est d'utiliser un joint dit « solidifié ». Entre la conduite et le presse-étoupe graphite se trouve un espace refroidi par le biais d'ailettes externes. Le sodium, se refroidissant dans cette zone tampon, va dès lors créer sa propre barrière étanche. Ce système présente toutefois des inconvénients. Tout d'abord, la longueur de la surface d'échange thermique nécessaire impose d'avoir un sommet de vanne massif, lourd et notablement encombrant. De plus, si la vanne doit être manœuvrée régulièrement, on peut dégrader rapidement la zone du bouchon sodium en contact avec l'arbre. Le sodium, encore liquide, peut alors perler aisément jusqu'au presse-étoupe supérieur.

Un autre type de solution consiste en la réalisation de joints d'étanchéité métalliques comprenant au moins une lèvre intérieure, venant se mettre au contact de l'arbre. Ce principe est largement utilisé par ailleurs avec des élastomères : le diamètre intérieur de la lèvre est inférieur à celui de l'arbre et l'hyper-élasticité du matériau est ainsi utilisée pour créer une pression de contact de la lèvre sur l'arbre. Cependant, étendre ce principe avec un matériau métallique présente de nombreux inconvénients : ce matériau n'étant pas hyper-élastique, les tolérances diamétrales aussi bien de l'arbre que de la lèvre se doivent d'être serrées. Il y a également une très grande sensibilité aux variations de circularité de l'arbre, la lèvre étant par nature trop rigide pour les compenser. Enfin, l'étanchéité ne peut être obtenue que par le biais d'une pression de contact importante, générant un couple de manœuvre parfois conséquent, et surtout très difficile à maîtriser.

Il a été proposé de s'accommoder de tels inconvénients comme décrit par exemple dans le brevet américain US 7,428,912 B1. Il y est ainsi proposé d'ajouter à un joint en forme de « V » un système à cône poussé axialement par des ressorts et permettant de maintenir une pression régulière sur l'arbre. Toutefois, ce système n'apporte aucune compensation des défauts de circularité aussi bien de l'arbre que du joint, ce qui limite la performance en étanchéité. De plus, la forte rigidité intrinsèque de la lèvre du joint limite la plage de réglage du système.

Par ailleurs, une solution atypique a été présentée par la société canadienne VELAN qui consiste en l'utilisation d'un soufflet hydro-formé monté sur un arbre présentant un angle. Cette solution permet uniquement un mouvement de quart de tour de l'arbre. Malgré cette restriction, ce système permet de s'affranchir de toute étanchéité entre deux pièces mobiles l'une par rapport à l'autre. Il présente néanmoins de nombreux inconvénients. Tout d'abord, c'est un système complexe qui demande une grande hauteur. En effet, le système joue sur la capacité en flexion d'un soufflet mécanique, par nature limitée. Elle est aisément augmentable, mais cela implique aussi d'augmenter la longueur du soufflet, et donc son encombrement. De plus, cet assemblage est notablement coûteux et complexe à réaliser : en particulier, la forme de l'arbre oblige à passer par des processus d'usinage spécifiques et délicats. En outre, la tenue en pression de cet élément flexible reste à démontrer.

Par ailleurs, la demande de brevet français FR 2 151 186 A1 divulgue un joint annulaire flexible assurant une étanchéité optimale en raison de sa facilité à épouser les surfaces contre lesquelles il est appliqué. Plus précisément, le joint métallique flexible comprend une âme constituée par un ressort hélicoïdal métallique à spires jointives refermé sur lui-même et présentant la forme d'un tore. Une première enveloppe en métal non ductile, ayant la forme d'une surface torique, permet l'encastrement du ressort, et une deuxième enveloppe en métal ductile, ayant également la forme d'une surface torique, permet l'encastrement de la première enveloppe.

Un autre assemblage d'étanchéité métallique, selon le préambule de la revendication 1, est connu de FR 2 721 085 A1.

### EXPOSÉ DE L'INVENTION

L'invention a pour but de remédier au moins partiellement aux besoins mentionnés ci-dessus et aux inconvénients relatifs aux réalisations de l'art antérieur.

En particulier, elle vise à proposer un assemblage d'étanchéité métallique pour arbre tournant, alliant compacité, haute performance en étanchéité et effort de manœuvre aisément ajustable.

L'invention a ainsi pour objet, selon l'un de ses aspects, un assemblage d'étanchéité métallique pour l'étanchéité entre un arbre tournant et un bâti fixe d'une machine de réception, caractérisé en ce qu'il comporte :
- un joint d'étanchéité métallique flexible à deux tores concentriques de diamètres moyens différents, comprenant :
   - un premier ressort hélicoïdal métallique à spires jointives refermé sur lui-même et présentant sensiblement, à l'état de repos, la forme d'un tore, dénommé tore intérieur,
   - un deuxième ressort hélicoïdal métallique à spires jointives refermé sur lui-même et présentant sensiblement, à l'état de repos, la forme d'un tore, dénommé tore extérieur, le tore extérieur présentant un diamètre moyen supérieur au diamètre moyen du tore intérieur, l'un des tores intérieur et extérieur étant positionné entre une pièce tournante et une pièce non tournante et étant ainsi dénommé « tore dynamique », et l'autre des tores intérieur et extérieur étant positionné entre deux pièces non tournantes l'une par rapport à l'autre et étant ainsi dénommé « tore statique »,
   - une enveloppe métallique dans laquelle sont encastrés et maintenus le tore intérieur et le tore extérieur, présentant sensiblement, à l'état de repos, la forme d'un tore creux comprenant un logement intérieur et un logement extérieur, respectivement pour l'encastrement du tore intérieur et du tore extérieur, la surface de l'enveloppe comprenant une ouverture annulaire entre les logements intérieur et extérieur, ladite enveloppe comprenant :
      - une portion intérieure de recouvrement définissant le logement intérieur et permettant le recouvrement partiel du tore intérieur,
      - une portion extérieure de recouvrement définissant le logement extérieur et permettant le recouvrement partiel du tore extérieur,
      - une portion intermédiaire, dénommée inter-tores, reliant la portion intérieure de recouvrement et la portion extérieure de recouvrement, formée en vis-à-vis de l'ouverture annulaire,
- un arbre tournant autour d'un axe de rotation, comprenant un épaulement annulaire contre lequel le joint d'étanchéité métallique vient en appui au niveau du tore statique, le joint d'étanchéité métallique positionné autour de l'arbre tournant étant centré par le biais de son diamètre intérieur,
- une pièce dite contreface, comprenant une face de contact, sensiblement plane, contre laquelle le joint d'étanchéité métallique vient en appui au niveau du tore dynamique,
- une cale, positionnée autour de l'arbre tournant de sorte que le joint d'étanchéité métallique soit pris entre d'une part la cale et d'autre part la face de contact de la contreface, la cale étant montée sur l'arbre tournant de façon coulissante selon l'axe de rotation de l'arbre tournant,
- une pièce métallique formant capuchon, pouvant éventuellement être confondue avec la cale, recouvrant l'ensemble comprenant le joint d'étanchéité métallique et au moins la face de contact de la contreface, le capuchon étant traversé par l'arbre tournant et étant fixé sur le bâti et/ou sur la contreface, sur l'extérieur de la face de contact, l'arbre tournant étant libre en rotation par rapport au capuchon et solidaire axialement avec le capuchon.

L'assemblage d'étanchéité métallique selon l'invention peut en outre comporter l'une ou plusieurs des caractéristiques suivantes prises isolément ou suivant toutes combinaisons techniques possibles.

De façon avantageuse, le joint d'étanchéité métallique correspond à une réalisation particulière du joint d'étanchéité décrit dans la demande de brevet français FR 2 151 186 A1 décrite auparavant.

Selon une première variante, la contreface peut être une pièce non tournante, destinée à être fixée au bâti fixe. Dans ce cas, l'assemblage peut comporter un joint d'étanchéité, notamment un joint d'étanchéité statique, par exemple un joint torique, entre la contreface et le bâti.

Selon une deuxième variante, la contreface peut être une pièce tournante, solidarisée à l'arbre tournant au niveau de l'épaulement. Dans ce cas, l'assemblage peut comporter un joint d'étanchéité, notamment un joint d'étanchéité statique, par exemple un joint torique, entre la contreface et un épaulement de l'arbre tournant tel que décrit par la suite.

La face de contact de la contreface peut être rugueuse, cette rugosité étant notamment obtenue par le biais d'un polissage.

La cale peut être bloquée en rotation sur l'arbre tournant par l'intermédiaire d'une liaison goupillée et/ou clavetée.

En outre, l'assemblage peut comporter un écrou de serrage de la cale positionné de sorte que la cale soit située entre l'écrou de serrage et le joint d'étanchéité métallique. L'arbre tournant peut alors comporter une portion filetée sur laquelle l'écrou de serrage peut être vissé.

Par ailleurs, le capuchon peut comporter une pluralité de premiers trous lisses s'étendant selon l'axe de rotation et traversant axialement le capuchon, destinés à être positionnés en vis-à-vis de deuxièmes trous taraudés formés axialement dans la contreface et/ou de troisièmes trous taraudés formés axialement dans le bâti fixe, ou destinés à être positionnés en vis-à-vis de deuxièmes trous lisses formés axialement dans la contreface et de troisièmes trous taraudés formés axialement dans le bâti fixe. L'assemblage peut comporter une pluralité de tiges filetées, chaque tige filetée étant apte à être insérée dans un premier trou lisse ainsi que dans un deuxième trou lisse ou taraudé et/ou un troisième trou taraudé. Le capuchon peut être fixé sur le bâti et/ou sur la contreface par vissage d'écrous sur les tiges filetées en partie sommitale du capuchon.

Selon une première variante, le capuchon peut comprendre, notamment en partie sommitale, une pluralité de trous radiaux de même diamètre, s'étendant sensiblement perpendiculairement à l'axe de rotation de l'arbre tournant et débouchant sur le diamètre intérieur du capuchon de sorte à le traverser radialement. Des goupilles, de même diamètre que les trous radiaux, peuvent être insérées dans les trous radiaux. L'arbre tournant peut comporter une gorge dans laquelle pénètrent les goupilles pour bloquer le mouvement axial de l'arbre tournant. Un élément de blocage peut éventuellement être positionné autour du capuchon pour éviter un glissage des goupilles vers l'extérieur.

Selon une deuxième variante, le capuchon peut comporter sur son diamètre intérieur, au niveau du centrage de l'arbre tournant, un taraudage. L'arbre tournant peut comporter, au niveau du taraudage, une portion de diamètre réduit de sorte à créer un épaulement de blocage sur l'arbre tournant. L'assemblage peut comporter un écrou de blocage apte à venir se loger entre l'arbre tournant et le capuchon au niveau du taraudage et de la portion de diamètre réduit et à venir en appui contre l'épaulement de blocage de sorte à bloquer axialement le mouvement de l'arbre tournant.

Par ailleurs, la cale peut être réalisée en au moins deux parties, comprenant une première pièce dénommée cale interne en appui sur le tore intérieur, présentant un diamètre intérieur lisse destinée à coulisser sur l'arbre tournant et un diamètre extérieur fileté, et une deuxième pièce dénommée cale externe en appui sur le tore extérieur, présentant un diamètre intérieur fileté destinée à être vissée sur la cale interne.

En outre, la surface de cale de la cale, au contact avec la portion extérieure de recouvrement, peut présenter une rugosité plus importante que celle de la face de contact de la contreface.

La cale peut comporter un retour sur son diamètre extérieur permettant d'encapuchonner le tore extérieur sur son diamètre extérieur.

La face de contact de la contreface peut présenter une forme conique femelle.

Le joint d'étanchéité métallique peut comporter, sur sa surface, un dépôt de matériau rapporté, notamment de l'or et/ou de l'argent.

L'enveloppe métallique peut être une première enveloppe métallique constituée d'un matériau à haute résistance mécanique, notamment un alliage de type Inconel^{®}. Le joint d'étanchéité métallique peut comporter une deuxième enveloppe métallique enroulée sur la première enveloppe métallique et constituée d'un matériau plus ductile que celui de la première enveloppe métallique, notamment de l'argent, étant destiné à se déformer plastiquement lors de l'écrasement du joint d'étanchéité métallique

Par ailleurs, la contreface peut être constituée d'au moins trois parties solidarisées entre elles, comprenant un bloc interne pourvu de la face de contact contre laquelle le joint d'étanchéité métallique vient en appui au niveau du tore extérieur, un soufflet et une bride externe, le soufflet conférant un degré de liberté axial à l'assemblage pour ne pas bloquer d'éventuelles dilatations différentielles, le soufflet reliant le bloc interne et la bride externe, la bride externe étant fixée au bâti fixe.

En outre, le capuchon peut être constitué d'au moins deux parties, comprenant un capuchon externe fixé sur le bâti fixe et un capuchon interne solidarisé au capuchon externe par le biais d'une liaison vissée.

L'assemblage d'étanchéité métallique selon l'invention peut comporter l'une quelconque des caractéristiques énoncées dans la description, prises isolément ou selon toutes combinaisons techniquement possibles avec d'autres caractéristiques.

### BRÈVE DESCRIPTION DES DESSINS

L'invention pourra être mieux comprise à la lecture de la description détaillée qui va suivre, d'exemples de mise en œuvre non limitatifs de celle-ci, ainsi qu'à l'examen des figures, schématiques et partielles, du dessin annexé, sur lequel :
- la figure 1 représente une vue partielle en coupe d'un premier exemple d'assemblage d'étanchéité métallique conforme à l'invention,
- la figure 1A est une vue agrandie et simplifiée de la zone A de la figure 1,
- la figure 2 représente une autre vue partielle en coupe de l'assemblage de la figure 1 permettant de visualiser la fixation du capuchon sur la contreface et le bâti,
- la figure 3 représente encore une autre vue partielle en coupe de l'assemblage de la figure 1 permettant de visualiser le principe du blocage axial de l'arbre tournant,
- la figure 4 est une vue selon III-III de la figure 3,
- la figure 5 est une vue agrandie et simplifiée de la zone B de la figure 1,
- la figure 6 représente une vue partielle en coupe et en perspective d'un deuxième exemple d'assemblage d'étanchéité métallique conforme à l'invention, comprenant un soufflet de rattrapage de dilatation,
- la figure 7 est une vue partielle selon C de la figure 6,
- la figure 8 représente une courbe de compression typique de l'évolution de l'effort linéique en fonction de l'écrasement pour un joint d'étanchéité métallique de l'art antérieur,
- les figures 9A et 9B représentent en coupe partielle des variantes de réalisation de formes non planes de la face de contact de la contreface,
- les figures 10 à 12 représentent des vues partielles en coupe d'autres exemples de réalisation d'un assemblage d'étanchéité métallique conformes à l'invention, et
- la figure 13 illustre, schématiquement en coupe partielle, un mode de réalisation d'un assemblage d'étanchéité métallique conforme à l'invention dans lequel la contreface est une pièce tournante, solidarisée à l'arbre tournant au niveau de son épaulement.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

Dans toute la description, il est noté que la direction axiale correspond à l'axe de rotation X de l'arbre tournant 16. Une direction radiale est une direction perpendiculaire à l'axe X. En outre, sauf précision contraire, les adjectifs et adverbes axial, radial, axialement et radialement sont utilisés en référence aux directions axiale et radiale précitées. De plus, sauf précision contraire, les termes intérieur (ou interne) et extérieur (ou externe) sont utilisés en référence à une direction radiale de sorte que la partie intérieure d'un élément est plus proche de l'axe X de l'arbre tournant 16 que la partie extérieure du même élément. Ainsi, un diamètre intérieur est plus proche de l'axe de rotation X qu'un diamètre extérieur. Pour un même élément, le diamètre intérieur est la partie du diamètre la plus proche de l'axe de rotation X et le diamètre extérieur est la partie du diamètre la plus éloignée de l'axe de rotation X. De même, le tore intérieur 24 est plus proche de l'axe de rotation X que le tore extérieur 25.

La présente invention propose une construction d'un assemblage d'étanchéité métallique 30 tout particulièrement adaptée à un mouvement rotatif lent d'un arbre.

L'assemblage se construit autour de deux composants particuliers que sont le joint d'étanchéité métallique 1 et la contreface 14, décrits ci-après.

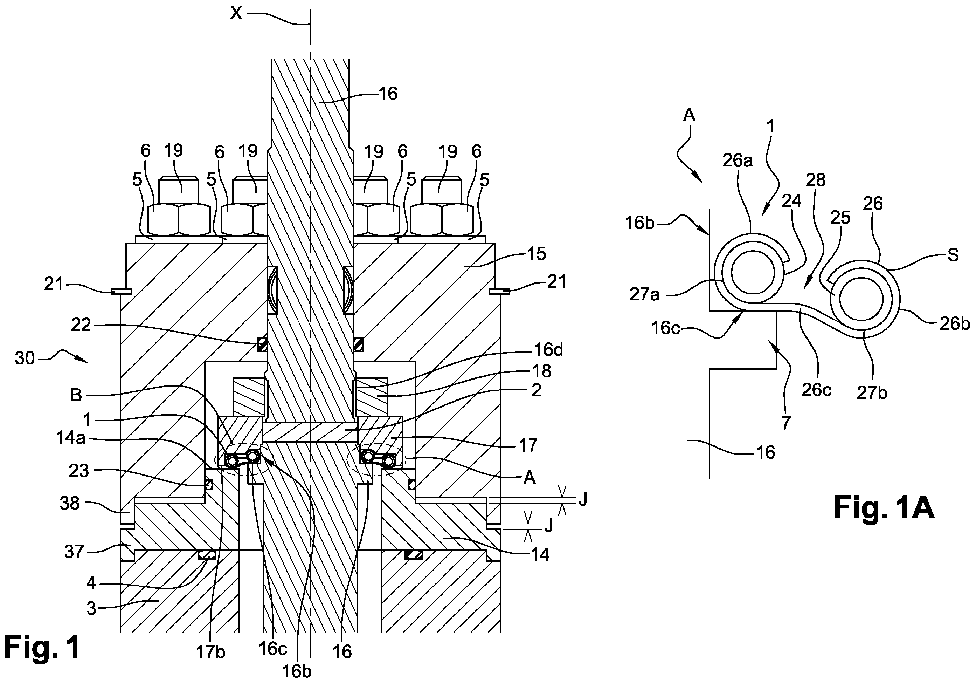

Il est à noter que, dans l'ensemble des figures 1 à 12 relatives à une contreface 14 non tournante, le tore intérieur 24 constitue le tore statique, pris entre deux pièces tournantes solidaires en rotation, tandis que le tore extérieur 25 constitue le tore dynamique, pris entre une pièce tournante et une pièce fixe.

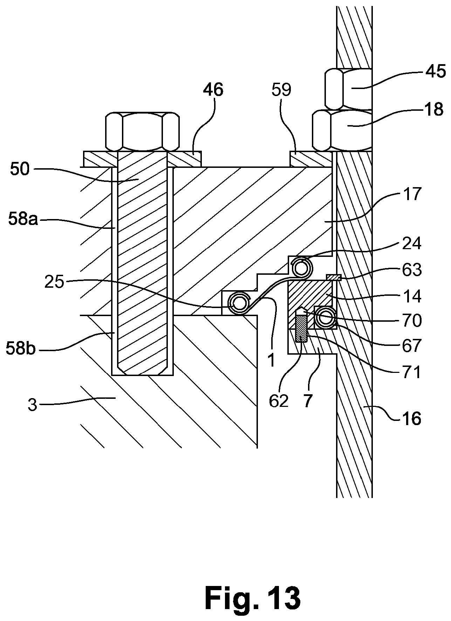

Au contraire, dans l'exemple de réalisation de la figure 13 décrit par la suite, relatif à une contreface 14 tournante, le tore intérieur 24 constitue le tore dynamique tandis que le tore extérieur 25 constitue le tore statique.

Ainsi, la figure 1 représente une vue partielle en coupe d'un premier exemple d'assemblage d'étanchéité métallique 30 conforme à l'invention, et la figure 1A est une vue agrandie et simplifiée de la zone A de la figure 1.

L'assemblage 30 est destiné à permettre la réalisation d'une étanchéité entre un arbre tournant 16 et un bâti fixe 3 d'une machine de réception, ou encore le corps de l'objet comprenant l'assemblage 30.

L'assemblage 30 comporte tout d'abord un joint d'étanchéité métallique flexible 1 à deux tores concentriques de diamètres moyens différents, ce joint correspondant notamment à un joint d'étanchéité double-tores obtenu selon le principe décrit dans la demande de brevet français FR 2 151 186 A1 décrite précédemment.

Comme visible sur la figure 1A, le joint d'étanchéité métallique 1 comporte ainsi un premier ressort hélicoïdal métallique à spires jointives refermé sur lui-même et présentant sensiblement, à l'état de repos, la forme d'un tore, dénommé tore intérieur 24, et un deuxième ressort hélicoïdal métallique à spires jointives refermé sur lui-même et présentant sensiblement, à l'état de repos, la forme d'un tore, dénommé tore extérieur 25. Le tore extérieur 25 présente un diamètre moyen supérieur au diamètre moyen du tore intérieur 24.

De plus, le joint d'étanchéité 1 comporte une enveloppe métallique 26, ou feuillard métallique 26, dans laquelle sont encastrés et maintenus le tore intérieur 24 et le tore extérieur 25. Ce feuillard 26 présente sensiblement, à l'état de repos, la forme d'un tore creux comprenant un logement intérieur 27a et un logement extérieur 27b, respectivement pour l'encastrement du tore intérieur 24 et du tore extérieur 25. De plus, la surface S du feuillard 26 comprend une ouverture annulaire 28 entre les logements intérieur 27a et extérieur 27b, formée sur la partie supérieure de la surface S du feuillard 26.

Ainsi, le feuillard 26 recouvre les tores intérieur 25 et extérieur 26. On peut distinguer trois zones sur le feuillard 26 :
Celui-ci comporte tout d'abord une portion intérieure de recouvrement 26a définissant le logement intérieur 27a et permettant le recouvrement partiel du tore intérieur 24. Cette portion intérieure de recouvrement 26a est enroulée autour du tore intérieur 24, par exemple par fluotournage, avec ainsi une forme évoquant un « C » majuscule ouvert sur le diamètre extérieur du tore intérieur 24.

Par ailleurs, le feuillard 26 comporte une portion extérieure de recouvrement 26b définissant le logement extérieur 27b et permettant le recouvrement partiel du tore extérieur 25. Cette portion extérieure de recouvrement 26b est enroulée autour du tore extérieur 25, par exemple par fluotournage, avec ainsi une forme évoquant un « C » majuscule ouvert sur le diamètre intérieur du tore extérieur 25.

Enfin, les deux extrémités inférieures des deux « C » majuscules ainsi formés par la portion intérieure de recouvrement 26a et la portion extérieure de recouvrement 26b sont reliées entre elles par le biais d'une portion intermédiaire 26c, dénommée inter-tores 26c, reliant donc la portion intérieure de recouvrement 26a et la portion extérieure de recouvrement 26b, formée en vis-à-vis de l'ouverture annulaire 28 dans la partie inférieure de la surface S du feuillard 26. Cette zone d'inter-tores 26c ne supporte pas de ressort.

Il est à noter que, par observation en coupe comme sur la figure 1A, l'inter-tores 26c peut présenter une forme rectiligne mais également, comme le montre l'exemple de la figure 1A, une forme ondulée.

Par ailleurs, l'assemblage 30 comporte un arbre tournant 16 autour d'un axe de rotation X. Cet arbre tournant 16 comprend un épaulement annulaire 7 contre lequel le joint d'étanchéité métallique 1 vient en appui au niveau du tore intérieur 24, et plus précisément en appui contre la surface 16c de l'épaulement 7. Le joint 1 est donc monté sur l'épaulement 7, et positionné autour de l'arbre tournant 16 en étant centré par le biais de son diamètre intérieur avec la surface diamétrale 16b de l'arbre tournant 16.

Il est à noter que l'épaulement 7 présente une largeur, définie selon un axe perpendiculaire à l'axe X, qui est suffisante pour pouvoir soutenir le tore intérieur 24 par le dessous.

Par ailleurs, il faut également noter que le diamètre intérieur du joint d'étanchéité métallique 1 est suffisamment grand pour permettre le coulissement sur l'arbre tournant 16. Il est donc possible de positionner le joint 1 sur l'épaulement 7. Au contact axial entre le joint 1 et l'épaulement 7, une première ligne d'étanchéité se crée, une fois le tore intérieur 24 comprimé comme expliqué par la suite.

En outre, l'assemblage 30 comporte une cale 17 qui est glissée, étant coulissante axialement, autour de l'arbre tournant 16 de sorte que le joint d'étanchéité métallique 1 soit pris entre d'une part la cale 17 et d'autre part l'épaulement 7 de l'arbre tournant 16 et la face de contact 14a de la contreface 14 décrite par la suite. La cale 17 vient ainsi appuyer sur le tore intérieur 24 par le dessus.

Cette cale 17 peut être bloquée en rotation sur l'arbre par le biais d'une liaison goupillée et/ou d'une liaison clavetée. Dans cet exemple de réalisation, la cale 17 est bloquée en rotation par une goupille 2 rentrant dans deux cannelures en opposition, situées sur le diamètre intérieur de la cale 17.

Par ailleurs, un écrou de serrage 18 de la cale 17 est positionné autour de l'arbre tournant 16 de sorte que la cale 17 soit située entre l'écrou de serrage 18 et le joint d'étanchéité métallique 1. Pour ce faire, au-dessus de la cale 17, l'arbre tournant 16 comporte une portion filetée 16d sur laquelle l'écrou de serrage 18 est vissé. Le serrage de l'écrou 18 permet de pousser la cale 17 en direction de l'épaulement 7 et la compression du tore intérieur 24 intervient alors. Dans cet exemple également, la cale 17 recouvre le tore extérieur 25. Aussi, en fin de compression, la cale 17 est en contact ou très proche du tore extérieur 25. De façon avantageuse, l'assemblage 30 permet donc de comprimer le tore intérieur 24 sans que celui-ci ne soit soumis à la rotation de l'écrou 18, ce qui est usuellement déconseillé pour tout joint d'étanchéité métallique.

En outre, l'assemblage 30 comporte une pièce dite contreface 14, comprenant une face de contact 14a, sensiblement plane, contre laquelle le joint d'étanchéité métallique 1 vient en appui au niveau du tore extérieur 25.

Dans cet exemple de réalisation, la contreface 14 est une pièce non tournante fixée au bâti 3 de la machine de réception. Sous la contreface 14, une étanchéité est réalisée avec le bâti 3 par le biais d'un joint d'étanchéité statique sous la forme d'un joint torique 4.

Le tore extérieur 25 est destiné à entrer en contact avec la face de contact 14a de la contreface 14. Dans cet exemple particulier, cette face de contact 14a supérieure est recouverte de Stellite^{®}. Cette face de contact 14a est généralement plane mais non exclusivement. Elle présente préférentiellement une rugosité très faible, obtenue par exemple par le biais d'un polissage de précision. Elle est positionnée de manière à être en face du dessous du tore extérieur 25.

La contreface 14 est préférentiellement métallique. Toutefois, d'autres matériaux peuvent être utilisés, comme par exemple des céramiques, notamment des carbures de tungstène, des carbures de silicium, entre autres. De même, la face de contact 14a peut être revêtue, en particulier avant polissage, d'un dépôt de surface facilitant le glissement, par exemple un cernet ou encore une Stellite^{®} comme dans cet exemple.

Au moment où l'on vient monter l'arbre tournant 16, comprenant le joint d'étanchéité métallique 1, l'agencement géométrique de l'assemblage fait que le tore extérieur 25 du joint 1 vient s'appuyer sur la face de contact 14a. Le joint 1 étant fixé sur l'arbre tournant 16, il en résulte que le tore extérieur 25 va, lors des rotations de l'arbre tournant 16, glisser sur la face de contact 14a.

Pour obtenir sur ce tore extérieur 25 un niveau d'étanchéité adéquat, il est alors préférable de comprimer axialement ce tore 25. Le système comprimant le tore extérieur 25 doit alors préférentiellement tourner simultanément avec l'arbre tournant 16. En effet, si une pièce métallique comprimant ce tore 25 était statique, le tore 25 se retrouverait fortement pincé axialement. La mise en rotation de l'arbre tournant 16 risquerait alors de conduire à un violent cisaillement, suivi d'une rupture de l'inter-tores 16c.

En conséquence, de façon préférentielle, la cale 17 joue également un rôle au niveau du tore extérieur 25 lors de la mise en compression. Sa géométrie fait que lors de la compression du tore intérieur 24, elle vient également en contact avec le tore extérieur 25, à l'opposé de la face de contact 14a, voire même l'encapuchonne sur une partie significative de sa hauteur dans certaines réalisations préférées de l'invention décrites par la suite.

La compression du tore extérieur 25 va donc s'effectuer entre la cale 17 mobile d'une part et la contreface 14 fixe d'autre part. L'effort de compression du tore extérieur 25 transitera donc par l'arbre tournant 16.

Pour appliquer cet effort sur l'arbre tournant 16, l'assemblage 30 comporte avantageusement une pièce métallique formant capuchon 15 recouvrant l'ensemble comprenant la cale 17, l'écrou de serrage 18, le joint d'étanchéité métallique 1 et au moins la face de contact 14a de la contreface 14. Le capuchon 15 laisse l'arbre tournant 16 libre en rotation. Toutefois, il est solidaire axialement de l'arbre tournant 16 de sorte à créer entre eux une liaison rotative mais non-translative.

Sur sa partie sommitale, l'arbre tournant 16 traverse le capuchon 15 de sorte à permettre le centrage de l'arbre tournant 16. Sur la figure 1, il est à noter la présence optionnelle de deux joints d'étanchéité toriques 22 et 23 pouvant être intégrés dans l'assemblage 30 à des fins de tests de performance. De plus, un jeu J est prévu entre le capuchon 15 et la contreface 14.

En outre, comme visible sur cette figure 1, le capuchon 15 comporte un retour 38 sur son diamètre extérieur qui vient encapuchonner le diamètre extérieur de la contreface 14. De même, la contreface 14 comporte un retour 37 sur son diamètre extérieur qui vient encapuchonner le diamètre extérieur du bâti fixe 3.

Le capuchon 15 peut être fixé sur le bâti 3 par une boulonnerie et/ou directement sur la contreface 14, et préférentiellement dans ce cas sur l'extérieur de la face de contact 14a. On crée ainsi entre l'arbre tournant 16 et le capuchon 15, dans sa partie sommitale, une liaison rendant solidaire le mouvement axial des deux pièces, mais laissant l'arbre tournant 16 libre en rotation, comme par exemple un montage de roulements.

Au vu des vitesses généralement faibles pour les applications visées, on choisit préférentiellement un assemblage différent comme selon l'exemple de réalisation de la figure 1.

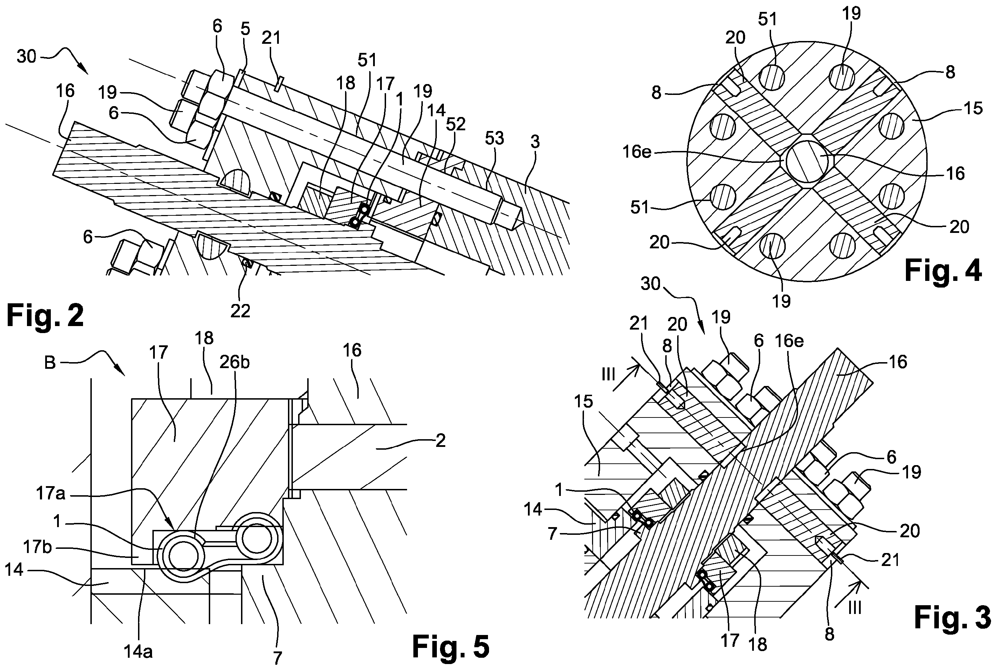

Ainsi, les figures 2 à 4 permettent de mieux comprendre le mode de serrage de l'ensemble. Comme visible sur la figure 2 par exemple, le capuchon 15 comporte une pluralité de premiers trous lisses 51 s'étendant selon l'axe de rotation X et traversant axialement le capuchon 15. Ces premiers trous lisses 51 sont positionnés en vis-à-vis de deuxièmes trous lisses 52 formés axialement dans la contreface 14, eux-mêmes en vis-à-vis de troisièmes trous taraudés 53 formés axialement dans le bâti fixe 3.

L'assemblage 30 comporte en outre une pluralité de tiges filetées 19 qui traversent le capuchon 15, la contreface 14 et le bâti 3 pour venir se prendre dans les trous lisses 51, 52 et taraudés 53. Le capuchon 15 est alors fixé sur le bâti 3 par vissage d'écrous 6 sur les tiges filetées 19 en partie sommitale du capuchon 15, des rondelles 5 étant ici positionnées entre les écrous 6 et le capuchon 15.

Par ailleurs, le capuchon 15 comprend en partie sommitale une pluralité de trous radiaux 8, ici quatre, de même diamètre, s'étendant perpendiculairement à l'axe de rotation X et débouchant sur le diamètre intérieur du capuchon 15 de sorte à le traverser radialement. Des goupilles 20, de même diamètre que les trous radiaux 8, sont insérées dans les trous radiaux 8.

L'arbre tournant 16 est positionné de telle sorte que les goupilles 20 rentrent dans une gorge 16e usinée dans l'arbre, dont la largeur est égale au diamètre des goupilles 20 augmentée d'un léger jeu. Les goupilles 20 rentrent dans la gorge 16e et bloquent ainsi le mouvement axial de l'arbre tournant 16. Grâce au léger jeu, la rotation reste libre.

De plus, un élément de blocage 21, dénommé « circlip », est ensuite positionné autour du capuchon 15 pour éviter que les goupilles 20 ne glissent à l'extérieur. Une fois cela effectué, les tiges 19 sont bloquées à l'aide des écrous 6. Le couple appliqué permet de régler l'effort sur le tore extérieur 25. On peut ainsi ajuster conjointement le niveau d'étanchéité et le couple résistif en rotation.

Lors du serrage du capuchon 15, on entraîne donc l'ensemble formé par l'arbre 16, le joint d'étanchéité 1, l'écrou 18 et la cale 17, et l'on vient écraser le tore extérieur 25 sur la face de contact 14a de la contreface 14. L'ensemble est dès lors prêt à tourner.

On sait que lors de la rotation, il est important de conserver une grande intimité entre le tore extérieur 25 et la face de contact 14a, dans le but d'obtenir une étanchéité de haut niveau. La face de contact 14a étant préférentiellement non complètement plane, ou de manière générale non complètement régulière, les spires du ressort permettent alors de suivre en continu les ondulations de la surface, et donc d'obtenir cette intimité à tout moment. L'étanchéité intérieure se fait quant à elle sur le tore intérieur 24 statique.

Le réglage de l'effort de compression sur le tore extérieur 25 s'effectue purement en axial : il n'est donc pas nécessaire de contrer la rigidité d'éléments cylindriques en radial. De fait, le réglage est aisé et il est possible d'optimiser le couple formé par le niveau d'étanchéité et l'effort de manœuvre. En effet, l'effort de manœuvre est directement lié à l'effort de compression, par le biais de l'effort de friction tangentiel ainsi généré.

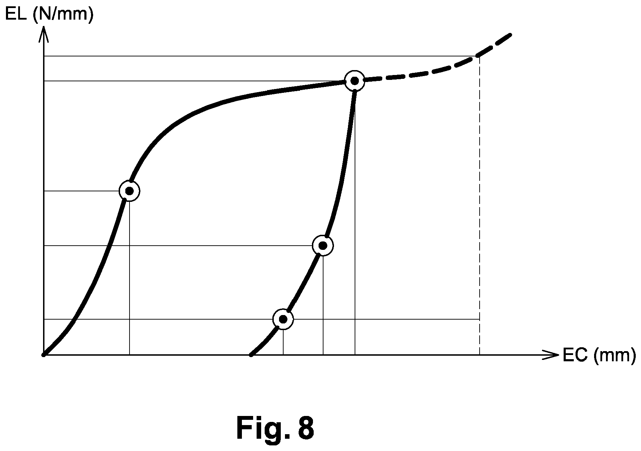

Une optimisation industrielle de ce principe de l'invention consiste en la mise en place d'un contact métal/métal entre le capuchon 15 et la pièce sur laquelle il est vissé, à savoir la contreface 14 ou le bâti 3, pour ajuster la compression du tore extérieur 25. Le joint d'étanchéité métallique 1 est comprimé alors à une cote prédéterminée. Ceci permet d'augmenter le couple de serrage après obtention du contact et éviter tout délestage lors de montées en haute pression. Ceci est acceptable dans la mesure où typiquement une courbe d'évolution de l'effort linéique EL, exprimé en N.mm⁻¹, en fonction de l'écrasement EC, exprimé en mm, comme le montre la figure 8, d'un joint d'étanchéité métallique du type de celui décrit dans la demande de brevet français FR 2 151 186 A1, et applicable au joint d'étanchéité métallique 1 de l'ensemble 30 selon l'invention, présente un plateau plat sur la fin de la compression, d'où une adaptabilité à des tolérances de logement larges.

En outre, il importe que lors de la rotation, le tore extérieure 25 puisse glisser sur la contreface 14 et ne pas glisser par contre à son interface avec la cale 17. Ainsi, la figure 5 permet d'illustrer un perfectionnement de l'invention pour lequel la surface de cale 17a de la cale 17, au contact avec la portion extérieure de recouvrement 26b, présente une rugosité plus importante que celle de la face de contact 14a de la contreface 14, cette dernière étant lisse. On cherche ainsi à favoriser le blocage dans la cale 17 et le glissement sur la contreface 14.

Par ailleurs, lorsque la pression du fluide va pousser depuis l'intérieur, il y a un risque de déformation du tore extérieur 25, voire un risque de pousser celui-ci. Aussi, un petit retour 17b formé sur le diamètre extérieur de la cale 17 permet d'encapuchonner le tore extérieur 25 sur son diamètre extérieur. La hauteur du retour 17b est inférieure à la cote comprimée du joint d'étanchéité 1, sans quoi le retour 17b frotterait sur la face de contact 14a et empêcherait la bonne compression du tore extérieure 25. Avantageusement, le montage est donc prévu pour conserver par construction un jeu axial minimal entre ce retour 17b et la face de contact 14a.

Un inconvénient de l'ensemble 30 peut consister en la présence du blocage axial de l'arbre tournant 16 par rapport au bâti 3 de la machine de réception, ce qui peut arriver notamment dans deux cas : si le capuchon 15 est fixé directement sur le bâti 3 ; si le capuchon 15 est fixé sur la contreface 14, et que la contreface 14 est fixée rigidement sur le bâti 3. Lors d'applications à températures élevées ou basses, il est alors possible d'observer des dilatations différentielles entre le bâti 3 et l'arbre tournant 16. La présence du blocage s'oppose à ce phénomène, ce qui peut être pénalisant.

De plus, il est courant que la position axiale de l'arbre tournant 16 soit déterminée par d'autres éléments mécaniques. Par exemple, sur une vanne à boule, la boule liée rigidement à l'arbre va s'auto-ajuster avec des éléments mécaniques internes. La position axiale de l'arbre sera une résultante à laquelle il faudra s'adapter.

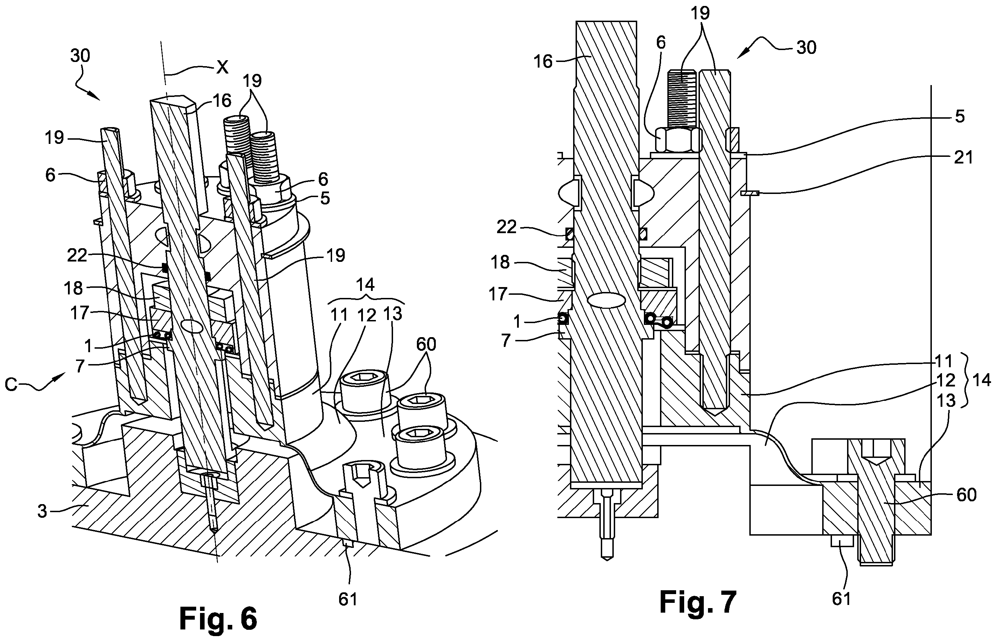

Une solution consiste alors à lier la contreface 14 à une pièce de type soufflet axial, lui-même relié au bâti 3. Ainsi, dans une autre réalisation de l'invention, telle que visible en référence aux figures 6 et 7, la contreface 14 est constituée de trois parties solidarisées entre elles, étant usinées ensemble ou soudées entre elles. La contreface 14 comprend alors un bloc interne 11 pourvu de la face de contact 14a contre laquelle le joint d'étanchéité métallique 1 vient en appui au niveau du tore extérieur 25, un soufflet 12 et une bride externe 13.

La bride externe 13 est fixée sur le bâti fixe 3 grâce à des boulons 60. Un joint d'étanchéité est inséré dans la gorge 61 pour garantir l'étanchéité. Les tiges filetées 19 sont cette fois-ci vissées directement sur le bloc interne 11, et non sur le bâti 3 comme précédemment. Le soufflet 12 confère un degré de liberté axial à l'assemblage 30 pour ne pas bloquer d'éventuelles dilatations différentielles, le soufflet 12 reliant le bloc interne 11 et la bride externe 13. Le soufflet 12 peut être hydro-formé, à lames soudées, voire même usiné dans la masse avec la contreface 14.

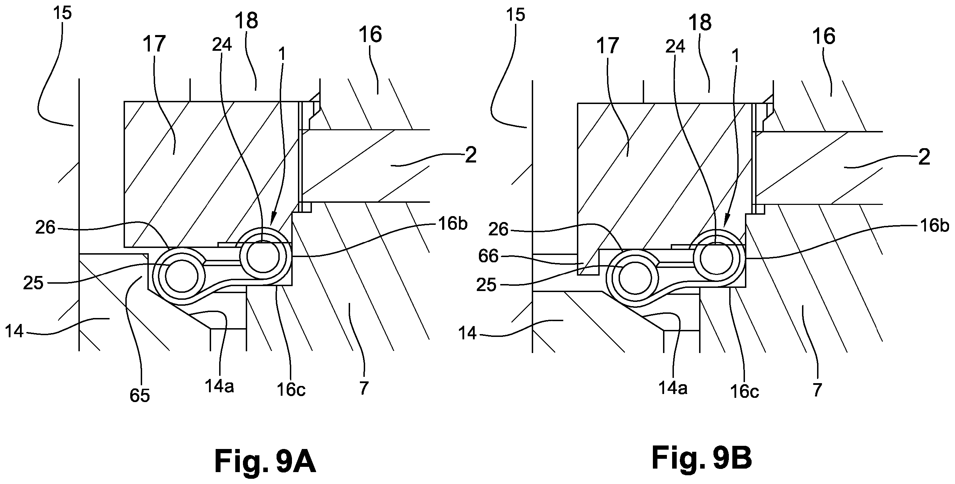

Par ailleurs, les figures 9A et 9B permettent de visualiser le fait d'avoir une face de contact 14a de la contreface 14 qui présente une forme conique femelle, typiquement pour des applications à forte pression interne. Le tore extérieur 25 est alternativement en contact avec la face de contact 14a de forme conique, et les retours 65 et 66 aident également à la tenue en pression. La pente ainsi créée limite par elle-même les mouvements radiaux et les retours 65, 66 peuvent agir comme ultime butée si nécessaire.

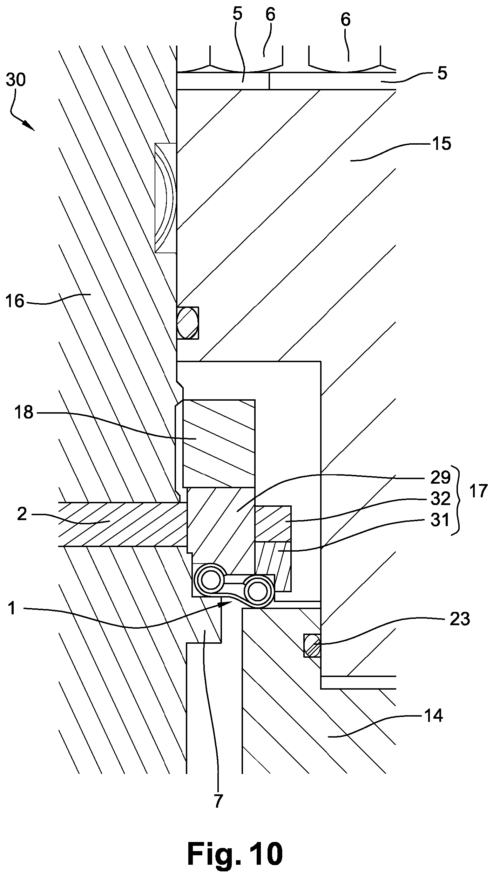

En outre, la figure 10 illustre le fait d'avoir une cale 17 divisée en trois parties. Ainsi, la cale 17 comprend une première pièce dénommée cale interne 29 en appui sur le tore intérieur 24, présentant un diamètre intérieur lisse et destinée à coulisser sur l'arbre tournant 16. La cale interne 29 comporte un diamètre extérieur fileté. Sa valeur est située entre celle du diamètre extérieur du tore intérieur 24 et celle du diamètre intérieur du tore extérieur 25. De plus, la cale 17 comprend une deuxième pièce dénommée cale externe 31 en appui sur le tore extérieur 25, présentant un diamètre intérieur fileté et étant destinée à être vissée sur la cale interne 29. Cette liaison vissée permet d'ajuster lors du montage la position des deux cales interne 29 et externe 31, ce qui peut être utile pour compenser les aléas liés aux variations dimensionnelles des différents composants. De plus, une fois le réglage effectué, la cale 17 comprend un contre-écrou 32 qui permet de figer ce réglage.

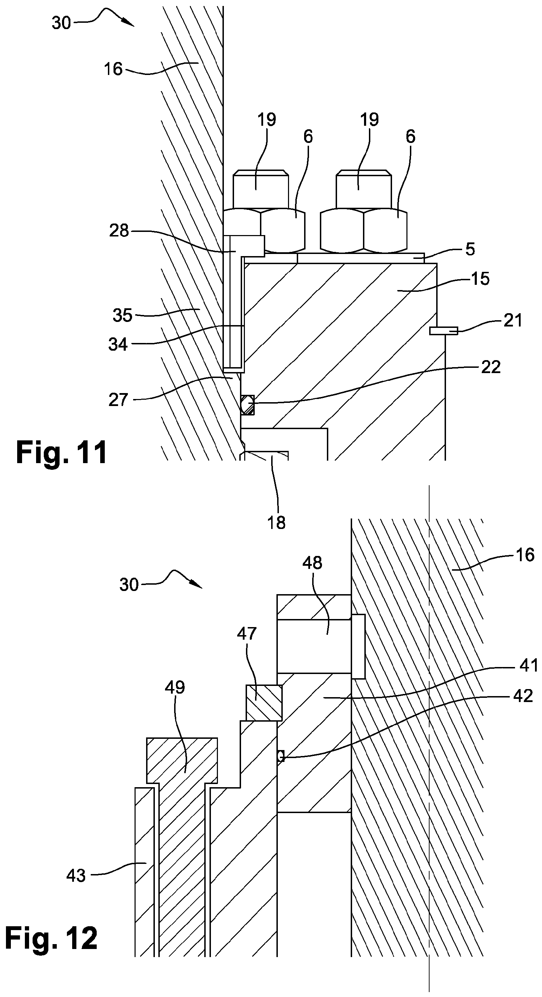

De manière générale, des optimisations peuvent permettre de prérégler l'écrasement du tore extérieur 25 avant montage. Un autre concept est illustré en référence à la figure 11 qui consiste à remplacer le système à goupilles radiales 20. Ainsi, le capuchon 15 comporte sur son diamètre intérieur, au niveau du centrage de l'arbre tournant 16, un taraudage 34, et l'arbre tournant 16 comporte, au niveau du taraudage 34, une portion de diamètre réduit 35 de sorte à créer un épaulement de blocage 27 sur l'arbre tournant 16.

De plus, l'assemblage 30 comporte un écrou de blocage 28 apte à venir se loger entre l'arbre tournant 16 et le capuchon 15 au niveau du taraudage 34 et de la portion de diamètre réduit 35 et à venir en appui contre l'épaulement de blocage 27 de sorte à bloquer axialement le mouvement de l'arbre tournant 16. Un contre-écrou (non représenté) peut permettre de bloquer l'ensemble pour éviter tout desserrage/sur-serrage lors des rotations de l'arbre tournant 16.

Par ailleurs, dans le cas où la problématique de dilatation différentielle ne se pose pas, et que l'on cherche juste à s'adapter à une position axiale de l'arbre 16 « subie » du fait d'ajustement d'autres composants, il est aussi possible de séparer le capuchon en deux.

Ainsi, la figure 12 présente une variante de réalisation dans laquelle le capuchon 15 est séparé en deux parties. Il comprend un capuchon externe 43 fixé sur le bâti 3, le capuchon externe 43 comportant des orifices pour le passage d'une boulonnerie 49 permettant la fixation au bâti 3. Le capuchon externe 43 est lié à un capuchon interne 41par le biais d'une liaison vissée 42. Le capuchon interne 41 comprend une liaison non-réglable avec l'arbre tournant 16, telle qu'un montage de roulements, un système de goupilles, entre autres. Ici, il s'agit d'un système de goupilles 48. La liaison filetée ou vissée 42 entre le capuchon interne 41 et le capuchon externe 43 permet de régler la hauteur du capuchon 15 et de pré-positionner en hauteur les goupilles 48 pour s'adapter à la position axiale de l'arbre tournant 16. Une fois le réglage effectué, un contre-écrou 47 peut permettre de bloquer le réglage.

En outre, il faut noter que dans un tel assemblage 30 selon l'invention, un couple de torsion peut se créer entre les tores intérieur 24 et extérieur 25. Lors des mises au point, on cherche donc à limiter la friction entre le tore extérieur 25 et la face de contact 14a de la contreface 14. Cela peut par exemple se faire par la mise en place d'un dépôt sur le joint d'étanchéité 1, comme par exemple un dépôt d'or ou d'argent. Celui-ci a de plus l'avantage d'augmenter la performance en étanchéité compte-tenu de sa souplesse superficielle.

Par ailleurs, dans certaines réalisations de l'invention, le joint d'étanchéité métallique 1 peut avoir deux enveloppes ou revêtements entourés l'un sur l'autre. Le premier enroulage ou premièr enveloppe 26, au contact des ressorts, est par exemple constitué d'un matériau à haute résistance mécanique, notamment un alliage de type Inconel^{®}, pour donner une cohésion mécanique au joint 1, et le deuxième enroulage est dans un matériau plus ductile, notamment de l'argent, destiné à se déformer plastiquement au contact des surfaces d'étanchéité pour réduire les taux de fuite.

Bien entendu, l'invention n'est pas limitée aux exemples de réalisation qui viennent d'être décrits. Diverses modifications peuvent y être apportées par l'homme du métier.

En particulier, la contreface 14 peut être une pièce tournante, solidarisée à l'arbre tournant 16 au niveau de l'épaulement 7, comme l'illustre la figure 13.

Sur cette figure 13, la contreface 14 est entraînée en rotation avec l'arbre tournant 16 par le biais d'une goupille d'entraînement 62 positionnée dans des logements 70 et 71 respectivement de la contreface 14 et de l'épaulement 7.

Par ailleurs, l'assemblage comporte un joint d'étanchéité secondaire 67, notamment un joint d'étanchéité statique, par exemple un joint torique, entre la contreface 14 et l'épaulement 7. Ce joint d'étanchéité 67 peut notamment correspondre à une réalisation particulière du joint d'étanchéité décrit dans la demande de brevet français FR 2 151 186 A1 décrite auparavant.

En outre, un élément de blocage secondaire 63, dénommé « circlip », est positionné au contact de la contreface 14 et de l'arbre tournant 16 de telle sorte que la contreface 14 soit située entre cet élément de blocage 63 et le joint d'étanchéité 67.

Dans cet exemple, le tore intérieur 24 joue le rôle de tore dynamique. Celui-ci est au contact de la surface 14a de la contreface 14.

Dans cet exemple également, la cale 17 joue le rôle du capuchon 15 de sorte que la cale 17 et le capuchon 15 correspondent ici au même élément structurel.

La cale 17 et le bâti 3 comportent par ailleurs respectivement des orifices 58a et 58b, notamment des orifices taraudés, pour le passage de moyens de fixation entre la cale 17 et le bâti 3, tels qu'une tige filetée 50. Ainsi, le bâti 3 et la cale 17 sont fixés ensemble et ne tournent pas.

Des rondelles métalliques 46 et 59 sont prévues au niveau de la tige filetée 50 et également entre la cale 17 et l'écrou 18 lequel est surmonté d'un contre-écrou 45 pour maintenir l'assemblage. Plus précisément, une rondelle métallique 59 préférentiellement glissante peut être prévue entre l'écrou 18 et la cale 17, tandis qu'une rondelle métallique ordinaire 46 peut être prévue au niveau de la tige filetée 50.

## Revendications

1. Assemblage (30) d'étanchéité métallique pour l'étanchéité entre un arbre tournant (16) et un bâti fixe (3) d'une machine de réception, comportant :
- un joint d'étanchéité métallique flexible (1) à deux tores concentriques de diamètres moyens différents, comprenant :
- un premier ressort hélicoïdal métallique à spires jointives refermé sur lui-même et présentant sensiblement, à l'état de repos, la forme d'un tore, dénommé tore intérieur (24),
- un deuxième ressort hélicoïdal métallique à spires jointives refermé sur lui-même et présentant sensiblement, à l'état de repos, la forme d'un tore, dénommé tore extérieur (25), le tore extérieur (25) présentant un diamètre moyen supérieur au diamètre moyen du tore intérieur (24), l'un des tores intérieur (24) et extérieur (25) étant positionné entre une pièce tournante et une pièce non tournante et étant ainsi dénommé « tore dynamique », et l'autre des tores intérieur (24) et extérieur (25) étant positionné entre deux pièces non tournantes l'une par rapport à l'autre et étant ainsi dénommé « tore statique »,
- une enveloppe métallique (26) dans laquelle sont encastrés et maintenus le tore intérieur (24) et le tore extérieur (25), présentant sensiblement, à l'état de repos, la forme d'un tore creux comprenant un logement intérieur (27a) et un logement extérieur (27b), respectivement pour l'encastrement du tore intérieur (24) et du tore extérieur (25), la surface (S) de l'enveloppe (26) comprenant une ouverture annulaire (28) entre les logements intérieur (27a) et extérieur (27b), ladite enveloppe (26) comprenant :
- une portion intérieure de recouvrement (26a) définissant le logement intérieur (27a) et permettant le recouvrement partiel du tore intérieur (24),
- une portion extérieure de recouvrement (26b) définissant le logement extérieur (27b) et permettant le recouvrement partiel du tore extérieur (25),
- une portion intermédiaire (26c), dénommée inter-tores (26c), reliant la portion intérieure de recouvrement (26a) et la portion extérieure de recouvrement (26b), formée en vis-à-vis de l'ouverture annulaire (28), ledit assemblage d'étanchéité métallique étant **caractérisé en ce qu'**il comporte :
- un arbre tournant (16) autour d'un axe de rotation (X), comprenant un épaulement annulaire (7), le joint d'étanchéité métallique (1) venant en appui au niveau du tore statique contre ledit épaulement annulaire (7) ou le bâti (3), le joint d'étanchéité métallique (1) positionné autour de l'arbre tournant (16) étant centré par le biais de son diamètre intérieur,
- une pièce dite contreface (14), comprenant une face de contact (14a), sensiblement plane, contre laquelle le joint d'étanchéité métallique (1) vient en appui au niveau du tore dynamique,
- une cale (17), positionnée autour de l'arbre tournant (16) de sorte que le joint d'étanchéité métallique (1) soit pris entre d'une part la cale (17) et d'autre part la face de contact (14a) de la contreface (14), la cale (17) étant montée sur l'arbre tournant (16) de façon coulissante selon l'axe de rotation (X) de l'arbre tournant (16),
- une pièce métallique formant capuchon (15) recouvrant l'ensemble comprenant le joint d'étanchéité métallique (1) et au moins la face de contact (14a) de la contreface (14), le capuchon (15) étant traversé par l'arbre tournant (16) et étant fixé sur le bâti (3) et/ou sur la contreface (14), sur l'extérieur de la face de contact (14a), l'arbre tournant (16) étant libre en rotation par rapport au capuchon (15) et solidaire axialement avec le capuchon (15).

2. Assemblage selon la revendication 1, **caractérisé en ce que** la contreface (14) est une pièce non tournante, destinée à être fixée au bâti fixe (3).

3. Assemblage selon la revendication 1 ou 2, **caractérisé en ce que** la face de contact (14a) de la contreface (14) est rugueuse, cette rugosité étant notamment obtenue par le biais d'un polissage.

4. Assemblage selon l'une quelconque des revendications précédentes, **caractérisé en ce que** la cale (17) est bloquée en rotation sur l'arbre tournant (16) par l'intermédiaire d'une liaison goupillée (2) et/ou clavetée.

5. Assemblage selon l'une quelconque des revendications précédentes, **caractérisé en ce qu'**il comporte un écrou de serrage (18) de la cale (17) positionné de sorte que la cale (17) soit située entre l'écrou de serrage (18) et le joint d'étanchéité métallique (1), l'arbre tournant (16) comportant une portion filetée (16d) sur laquelle l'écrou de serrage (18) est vissé.

6. Assemblage selon l'une quelconque des revendications précédentes, **caractérisé en ce que** le capuchon (15) comporte une pluralité de premiers trous lisses (51) s'étendant selon l'axe de rotation (X) et traversant axialement le capuchon (15), destinés à être positionnés en vis-à-vis de deuxièmes trous taraudés (52) formés axialement dans la contreface (14) et/ou de troisièmes trous taraudés (53) formés axialement dans le bâti fixe (3), ou destinés à être positionnés en vis-à-vis de deuxièmes trous lisses (52) formés axialement dans la contreface (14) et de troisièmes trous taraudés (53) formés axialement dans le bâti fixe (3), et **en ce que** l'assemblage (30) comporte une pluralité de tiges filetées (19), chaque tige filetée (19) étant apte à être insérée dans un premier trou lisse (51) ainsi que dans un deuxième trou lisse ou taraudé (52) et/ou un troisième trou taraudé (53), le capuchon (15) étant fixé sur le bâti (3) et/ou sur la contreface (14) par vissage d'écrous (6) sur les tiges filetées (19) en partie sommitale du capuchon (15).

7. Assemblage selon l'une quelconque des revendications précédentes, **caractérisé en ce que** le capuchon (15) comprend, notamment en partie sommitale, une pluralité de trous radiaux (8) de même diamètre, s'étendant sensiblement perpendiculairement à l'axe de rotation (X) et débouchant sur le diamètre intérieur du capuchon (15) de sorte à le traverser radialement, **en ce que** des goupilles (20), de même diamètre que les trous radiaux (8), sont insérées dans les trous radiaux (8), et **en ce que** l'arbre tournant (16) comporte une gorge (16e) dans laquelle pénètrent les goupilles (20) pour bloquer le mouvement axial de l'arbre tournant (16), un élément de blocage (21) étant éventuellement positionné autour du capuchon (15) pour éviter un glissage des goupilles (20) vers l'extérieur.

8. Assemblage selon l'une quelconque des revendications 1 à 7, **caractérisé en ce que** le capuchon (15) comporte sur son diamètre intérieur, au niveau du centrage de l'arbre tournant (16), un taraudage (34), et **en ce que** l'arbre tournant (16) comporte, au niveau du taraudage (34), une portion de diamètre réduit (35) de sorte à créer un épaulement de blocage (27) sur l'arbre tournant (16), l'assemblage (30) comportant un écrou de blocage (28) apte à venir se loger entre l'arbre tournant (16) et le capuchon (15) au niveau du taraudage (34) et de la portion de diamètre réduit (35) et à venir en appui contre l'épaulement de blocage (27) de sorte à bloquer axialement le mouvement de l'arbre tournant (16).

9. Assemblage selon l'une quelconque des revendications précédentes, **caractérisé en ce que** la cale (17) est réalisée en au moins deux parties, comprenant une première pièce dénommée cale interne (29) en appui sur le tore intérieur (24), présentant un diamètre intérieur lisse destinée à coulisser sur l'arbre tournant (16) et un diamètre extérieur fileté, et une deuxième pièce dénommée cale externe (31) en appui sur le tore extérieur (25), présentant un diamètre intérieur fileté destinée à être vissée sur la cale interne (29).

10. Assemblage selon l'une quelconque des revendications précédentes, **caractérisé en ce que** la surface de cale (17a) de la cale (17), au contact avec la portion extérieure de recouvrement (26b), présente une rugosité plus importante que celle de la face de contact (14a) de la contreface (14).

11. Assemblage selon l'une quelconque des revendications précédentes, **caractérisé en ce que** la cale (17) comporte un retour (17b) sur son diamètre extérieur permettant d'encapuchonner le tore extérieur (25) sur son diamètre extérieur.

12. Assemblage selon l'une quelconque des revendications précédentes, **caractérisé en ce que** la face de contact (14a) de la contreface (14) présente une forme conique femelle.

13. Assemblage selon l'une quelconque des revendications précédentes, **caractérisé en ce que** le joint d'étanchéité métallique (1) comporte, sur sa surface, un dépôt de matériau rapporté, notamment de l'or et/ou de l'argent.

14. Assemblage selon l'une quelconque des revendications précédentes, **caractérisé en ce que** l'enveloppe métallique (26) est une première enveloppe métallique (26) constituée d'un matériau à haute résistance mécanique et **en ce que** le joint d'étanchéité métallique (1) comporte une deuxième enveloppe métallique enroulée sur la première enveloppe métallique et constituée d'un matériau plus ductile que celui de la première enveloppe métallique (26), notamment de l'argent, étant destiné à se déformer plastiquement lors de l'écrasement du joint d'étanchéité métallique (1).

15. Assemblage selon l'une quelconque des revendications précédentes, **caractérisé en ce que** la contreface (14) est constituée d'au moins trois parties solidarisées entre elles, comprenant un bloc interne (11) pourvu de la face de contact (14a) contre laquelle le joint d'étanchéité métallique (1) vient en appui au niveau du tore extérieur (25), un soufflet (12) et une bride externe (13), le soufflet (12) conférant un degré de liberté axial à l'assemblage (30) pour ne pas bloquer d'éventuelles dilatations différentielles, le soufflet (12) reliant le bloc interne (11) et la bride externe (13), la bride externe (13) étant fixée au bâti fixe (3).

16. Assemblage selon l'une quelconque des revendications précédentes, **caractérisé en ce que** le capuchon (15) est constitué d'au moins deux parties, comprenant un capuchon externe (43) fixé sur le bâti fixe (3) et un capuchon interne (41) solidarisé au capuchon externe (43) par le biais d'une liaison vissée (42).

17. Assemblage selon la revendication 1, **caractérisé en ce que** la contreface (14) est une pièce tournante, solidarisée à l'arbre tournant (16) au niveau de l'épaulement (7).

## Patentansprüche

1. Metallabdichtungsbaugruppe (30) zur Abdichtung zwischen einer Drehwelle (16) und einem festen Gestell (3) einer Aufnahmemaschine, die Folgendes aufweist:
- eine flexible Metalldichtung (1) mit zwei konzentrischen Tori unterschiedlicher mittlerer Durchmesser, umfassend:
- eine erste Metallschraubenfeder mit aneinanderliegenden Windungen, die in sich geschlossen ist und im Ruhezustand im Wesentlichen die Form eines Torus besitzt, der als innerer Torus (24) bezeichnet wird,
- eine zweite Metallschraubenfeder mit aneinanderliegenden Windungen, die in sich geschlossen ist und im Ruhezustand im Wesentlichen die Form eines Torus besitzt, der als äußerer Torus (25) bezeichnet wird, wobei der äußere Torus (25) einen mittleren Durchmesser aufweist, der größer ist als der mittlere Durchmesser des inneren Torus (24), wobei einer des inneren (24) und äußeren Torus (25) zwischen einem drehenden und einem nicht drehenden Teil positioniert ist und somit als "dynamischer Torus" bezeichnet wird, und der andere des inneren (24) und äußeren (25) Torus zwischen zwei sich nicht zueinander drehenden Teilen positioniert und somit als "statischer Torus" bezeichnet wird,
- eine Metallhülle (26), in der der innere Torus (24) und der äußere Torus (25) eingebettet und gehalten werden und die im Ruhezustand im Wesentlichen die Form eines hohlen Torus besitzt, der ein inneres Gehäuse (27a) und ein äußeres Gehäuse (27b) jeweils für die Einbettung des inneren Torus (24) und des äußeren Torus (25) umfasst, wobei die Oberfläche (S) der Hülle (26) eine ringförmige Öffnung (28) zwischen dem inneren Gehäuse (27a) und dem äußeren Gehäuse (27b) umfasst, wobei die Hülle (26) Folgendes umfasst:
- einen inneren Abdeckabschnitt (26a), der die innere Aufnahme (27a) definiert und die teilweise Abdeckung des inneren Torus (24) ermöglicht,
- einen äußeren Abdeckabschnitt (26b), der die äußere Aufnahme (27b) definiert und die teilweise Abdeckung des äußeren Torus (25) ermöglicht,
- einen Zwischenabschnitt (26c), der als Zwischentorusabschnitt (26c) bezeichnet wird, der den inneren Abdeckabschnitt (26a) und den äußeren Abdeckabschnitt (26b) verbindet, der gegenüber der ringförmigen Öffnung (28) gebildet ist, wobei die Metallabdichtungsbaugruppe **dadurch gekennzeichnet ist, dass** sie Folgendes aufweist:
- eine Drehwelle (16) um eine Drehachse (X), umfassend eine ringförmige Schulter (7), wobei die Metalldichtung (1) in dem Bereich des statischen Torus gegen die ringförmige Schulter (7) oder das Gestell (3) anliegt, wobei die Metalldichtung (1) um die Drehwelle (16) herum über ihren Innendurchmesser zentriert ist,
- ein Gegenflächenteil (14), das eine im Wesentlichen ebene Kontaktfläche (14a) umfasst, an der die Metalldichtung (1) in dem Bereich des dynamischen Torus anliegt,
- einen Keil (17), der um die Drehwelle (16) herum so positioniert ist, dass die Metalldichtung (1) einerseits zwischen dem Keil (17) und andererseits der Kontaktfläche (14a) der Gegenfläche (14) eingeklemmt wird, wobei der Keil (17) auf der Drehwelle (16) entlang der Drehachse (X) der Drehwelle (16) verschiebbar montiert ist,
- ein Metallteil, das eine Kappe (15) bildet, die die gesamte Baugruppe abdeckt, umfassend die Metalldichtung (1) und mindestens die Kontaktfläche (14a) der Gegenfläche (14), wobei die Kappe (15) von der Drehwelle (16) durchquert wird und an dem Gehäuse (3) und/oder an der Gegenfläche (14) an der Außenseite der Kontaktfläche (14a) befestigt ist, wobei die Drehwelle (16) gegenüber der Kappe (15) frei drehbar und axial fest mit der Kappe verbunden ist (15).

2. Baugruppe nach Anspruch 1, **dadurch gekennzeichnet, dass** die Gegenfläche (14) ein nicht drehendes Teil ist, das zum Befestigen an dem festen Gestell (3) bestimmt ist.

3. Baugruppe nach Anspruch 1 oder 2, **dadurch gekennzeichnet, dass** die Kontaktfläche (14a) der Gegenfläche (14) rau ist, wobei diese Rauheit insbesondere durch Polieren erreicht wird.

4. Baugruppe nach einem der vorhergehenden Ansprüche, **dadurch gekennzeichnet, dass** der Keil (17) über eine Stiftverbindung (2) und/oder eine Keilverbindung gegen Drehung auf der Drehwelle (16) gesperrt ist.

5. Baugruppe nach einem der vorhergehenden Ansprüche, **dadurch gekennzeichnet, dass** sie eine Spannmutter (18) des Keils (17) aufweist, die so positioniert ist, dass sich der Keil (17) zwischen der Spannmutter (18) und der Metalldichtung (1) befindet, wobei die Drehwelle (16) einen Gewindeabschnitt (16d) aufweist, auf den die Spannmutter (18) aufgeschraubt ist.

6. Baugruppe nach einem der vorhergehenden Ansprüche, **dadurch gekennzeichnet, dass** die Kappe (15) eine Vielzahl von ersten glatten Löchern (51) aufweist, die sich entlang der Drehachse (X) erstrecken, die Kappe (15) axial durchqueren und dazu bestimmt sind, gegenüber in der Gegenfläche (14) axial gebildeten zweiten Gewindelöchern (52) und/oder in dem festen Gestell (3) axial gebildeten dritten Gewindelöchern (53) positioniert zu werden, oder die dazu bestimmt sind, gegenüber in der Gegenfläche (14) axial gebildeten zweiten glatten Löchern (52) und in dem festen Gestell (3) axial gebildeten dritten Gewindelöchern (53) positioniert zu werden, und wobei die Baugruppe (30) eine Vielzahl von Gewindestangen (19) aufweist, wobei jede Gewindestange (19) in ein erstes glattes Loch (51) sowie in ein zweites glattes oder Gewindeloch (52) und/oder ein drittes Gewindeloch (53) eingesetzt werden kann, wobei die Kappe (15) an dem Gestell (3) und/oder an der Gegenfläche (14) durch Aufschrauben von Muttern (6) auf die Gewindestangen (19) in dem oberen Teil der Kappe (15) befestigt ist.

7. Baugruppe nach einem der vorhergehenden Ansprüche, **dadurch gekennzeichnet, dass** die Kappe (15) insbesondere in dem oberen Teil eine Vielzahl von radialen Löchern (8) mit gleichem Durchmesser umfasst, die sich im Wesentlichen senkrecht zu der Drehachse (X) erstrecken und zum Innendurchmesser der Kappe (15) münden, so dass diese radial durchquert wird, dass Stifte (20) mit demselben Durchmesser wie die radialen Löcher (8) in die radialen Löcher (8) eingesetzt sind und dass die Drehwelle (16) eine Nut (16e) aufweist, in die die Stifte (20) eingreifen, um die axiale Bewegung der Drehwelle (16) zu sperren, wobei eventuell ein Sperrelement (21) um die Kappe (15) herum positioniert ist, um ein Herausrutschen der Stifte (20) nach außen zu verhindern.

8. Baugruppe nach einem der Ansprüche 1 bis 7, **dadurch gekennzeichnet, dass** die Kappe (15) an ihrem Innendurchmesser in dem Bereich der Zentrierung der Drehwelle (16) eine Gewindebohrung (34) aufweist, und dass die Drehwelle (16) an der Gewindebohrung (34) einen Abschnitt mit reduziertem Durchmesser (35) aufweist, um eine Sperrschulter (27) an der Drehwelle (16) zu erzeugen, wobei die Baugruppe (30) eine Sperrmutter (28) aufweist, die zwischen die Drehwelle (16) und die Kappe (15) im Bereich der Gewindebohrung (34) und des Teils mit reduziertem Durchmesser (35) passen und an der Sperrschulter (27) anliegen kann, um die Bewegung der Drehwelle (16) axial zu sperren.

9. Baugruppe nach einem der vorhergehenden Ansprüche, **dadurch gekennzeichnet, dass** der Keil (17) aus mindestens zwei Teilen hergestellt ist, umfassend ein erstes Teil, das als innerer Keil (29) bezeichnet wird, auf dem inneren Torus (24) aufliegt, einen glatten Innendurchmesser besitzt und dazu bestimmt ist, auf der Drehwelle (16) zu gleiten, und einen Außendurchmesser mit Gewinde besitzt, und ein zweites Teil, das als äußerer Keil (31) bezeichnet wird, auf dem äußeren Torus (25) aufliegt, einen Innendurchmesser mit Gewinde besitzt und dazu bestimmt ist, auf den inneren Keil (29) aufgeschraubt zu werden.

10. Baugruppe nach einem der vorhergehenden Ansprüche, **dadurch gekennzeichnet, dass** die Keilfläche (17a) des Keils (17), in Kontakt mit dem äußeren Abdeckabschnitt (26b), eine größere Rauheit besitzt als die der Kontaktfläche (14a) der Gegenfläche (14).

11. Baugruppe nach einem der vorhergehenden Ansprüche, **dadurch gekennzeichnet, dass** der Keil (17) einen Rücklauf (17b) an seinem Außendurchmesser aufweist, der es ermöglicht, den äußeren Torus (25) an seinem Außendurchmesser zu kappen.

12. Baugruppe nach einem der vorhergehenden Ansprüche, **dadurch gekennzeichnet, dass** die Kontaktfläche (14a) der Gegenfläche (14) eine Buchsen-Kegelform besitzt.

13. Baugruppe nach einem der vorhergehenden Ansprüche, **dadurch gekennzeichnet, dass** die Metalldichtung (1) auf ihrer Oberfläche eine Ablagerung von Aufsatzmaterial, insbesondere Gold und/oder Silber, aufweist.

14. Baugruppe nach einem der vorhergehenden Ansprüche, **dadurch gekennzeichnet, dass** die Metallhülle (26) eine erste Metallhülle (26) ist, die aus einem Material mit hoher mechanischer Festigkeit besteht, und dass die Metalldichtung (1) eine zweite Metallhülle aufweist, die auf die erste Metallhülle gewickelt ist und aus einem duktileren Material besteht als das der ersten Metallhülle (26), insbesondere aus Silber, wobei diese dazu bestimmt sind, sich beim Quetschen der Metalldichtung (1) plastisch zu verformen.

15. Baugruppe nach einem der vorhergehenden Ansprüche, **dadurch gekennzeichnet, dass** die Gegenfläche (14) aus mindestens drei miteinander verbundenen Teilen besteht, die einen inneren Block (11) umfassen, der mit der Kontaktfläche (14a) versehen ist, an der die Metalldichtung (1) in dem Bereich des äußeren Torus (25), einem Faltenbalg (12) und einem äußeren Flansch (13) anliegt, wobei der Faltenbalg (12) der Baugruppe (30) einen axialen Freiheitsgrad verleiht, um eventuelle Differenzausdehnungen nicht zu sperren, da der Faltenbalg (12) den inneren Block (11) und den äußeren Flansch (13) verbindet, wobei der äußere Flansch (13) an dem festen Rahmen (3) befestigt ist.

16. Baugruppe nach einem der vorhergehenden Ansprüche, **dadurch gekennzeichnet, dass** die Kappe (15) aus mindestens zwei Teilen besteht, die eine an dem festen Gestell (3) befestigte äußere Kappe (43) und eine mit der äußeren Kappe (43) über eine Schraubverbindung (42) fest verbundene innere Kappe (41) umfassen.

17. Baugruppe nach Anspruch 1, **dadurch gekennzeichnet, dass** die Gegenfläche (14) ein Drehteil ist, das an der Schulter (7) mit der Drehwelle (16) verbunden ist.

## Claims

1. Metallic sealing assembly (30) for sealing between a rotating shaft (16) and a fixed frame (3) of a receiving machine, including:
- a flexible metallic sealing joint (1) with two concentric tori having different average diameters, comprising:
- a first metallic helical spring with contiguous turns, closed onto itself and substantially having, at rest, the shape of a torus, called inner torus (24),
- a second metallic helical spring with contiguous turns, closed onto itself and substantially having, at rest, the shape of a torus, called outer torus (25), the outer torus (25) having an average diameter greater than the average diameter of the inner torus (24), one of the inner (24) and outer (25) tori being positioned between a rotating part and a non-rotating part and thus being called "dynamic torus", and the other of the inner (24) and outer (25) tori being positioned between two parts non-rotating with respect to one another and thus being called "static torus",
- a metallic jacket (26) in which the inner torus (24) and the outer torus (25) are embedded and maintained, substantially having, at rest, the shape of a hollow torus comprising an inner housing (27a) and an outer housing (27b), respectively for the embedding of the inner torus (24) and of the outer torus (25), the surface (S) of the jacket (26) comprising an annular opening (28) between the inner (27a) and outer (27b) housings, said jacket (26) comprising:
- an inner covering portion (26a) defining the inner housing (27a) and allowing the partial covering of the inner torus (24),
- an outer covering portion (26b) defining the outer housing (27b) and allowing the partial covering of the outer torus (25),
- an intermediate portion (26c), called inter-tori (26c), connecting the inner covering portion (26a) and the outer covering portion (26b), formed facing the annular opening (28),
said metallic sealing assembly being **characterised in that** it includes:
- a rotating shaft (16) rotating about an axis of rotation (X), comprising an annular shoulder (7), the metallic sealing joint (1) bearing at the static torus against said annular shoulder (7) or the frame (3), the metallic sealing joint (1) positioned around the rotating shaft (16) being centred via its inner diameter,
- a part called counterface (14), comprising a contact face (14a), substantially flat, against which the metallic sealing joint (1) bears at the dynamic torus,
- a wedge (17), positioned around the rotating shaft (16) so that the metallic sealing joint (1) is caught between on the one hand the wedge (17) and on the other hand the contact face (14a) of the counterface (14), the wedge (17) being mounted on the rotating shaft (16) in a sliding way along the axis of rotation (X) of the rotating shaft (16),
- a metallic part forming a bonnet (15) covering the assembly comprising the metallic sealing joint (1) and at least the contact face (14a) of the counterface (14), the bonnet (15) being passed through by the rotating shaft (16) and being fastened onto the frame (3) and/or onto the counterface (14), on the exterior of the contact face (14a), the rotating shaft (16) being free in rotation with respect to the bonnet (15) and axially rigidly connected to the bonnet (15).

2. Assembly according to claim 1, **characterised in that** the back (14) is a non-rotating part, intended to be fastened to the fixed frame (3).

3. Assembly according to claim 1 or 2, **characterised in that** the contact face (14a) of the counterface (14) is rough, this roughness being in particular obtained via polishing.

4. Assembly according to any one of the previous claims, **characterised in that** the wedge (17) is blocked in rotation on the rotating shaft (16) via a pinned (2) and/or keyed link.

5. Assembly according to any one of the previous claims, **characterised in that** it includes a clamping nut (18) for clamping the wedge (17) positioned so that the wedge (17) is located between the clamping nut (18) and the metallic sealing joint (1), the rotating shaft (16) including a threaded portion (16d) onto which the clamping nut (18) is screwed.

6. Assembly according to any one of the previous claims, **characterised in that** the bonnet (15) includes a plurality of first smooth holes (51) extending along the axis of rotation (X) and axially passing through the bonnet (15), intended to be positioned facing second threaded holes (52) formed axially in the counterface (14) and/or third threaded holes (53) formed axially in the fixed frame (3), or intended to be positioned facing second smooth holes (52) formed axially in the counterface (14) and third threaded holes (53) formed axially in the fixed frame (3), and **in that** the assembly (30) includes a plurality of threaded rods (19), each threaded rod (19) being capable of being inserted into a first smooth hole (51) as well as into a second smooth or threaded hole (52) and/or a third threaded hole (53), the bonnet (15) being fastened onto the frame (3) and/or onto the counterface (14) by screwing of nuts (6) onto the threaded rods (19) in the top part of the bonnet (15).

7. Assembly according to any one of the previous claims, **characterised in that** the bonnet (15) comprises, in particular in in an upper portion thereof, a plurality of radial holes (8) having the same diameter, extending substantially perpendicularly to the axis of rotation (X) and opening onto the inner diameter of the bonnet (15) so as to pass through it radially, **in that** pins (20), having the same diameter as the radial holes (8), are inserted into the radial holes (8), and **in that** the rotating shaft (16) includes a groove (16e) into which the pins (20) penetrate to block the axial movement of the rotating shaft (16), a blocking element (21) being optionally positioned around the bonnet (15) to prevent sliding of the pins (20) towards the outside.

8. Assembly according to any one of claims 1 to 7, **characterised in that** the bonnet (15) includes on its inner diameter, at the centring of the rotating shaft (16), an inner thread (34), and **in that** the rotating shaft (16) includes, at the inner thread (34), a portion having a reduced diameter (35) so as to create a blocking shoulder (27) on the rotating shaft (16), the assembly (30) including a locking nut (28) capable of being housed between the rotating shaft (16) and the bonnet (15) at the inner thread (34) and the portion having a reduced diameter (35) and of bearing against the blocking shoulder (27) so as to axially block the movement of the rotating shaft (16).

9. Assembly according to any one of the previous claims, **characterised in that** the wedge (17) is made in at least two parts, comprising a first part called inner wedge (29) bearing on the inner torus (24), having a smooth inner diameter intended to slide on the rotating shaft (16) and a threaded outer diameter, and a second part called outer wedge (31) bearing on the outer torus (25), having a threaded inner diameter intended to be screwed onto the inner wedge (29).

10. Assembly according to any one of the previous claims, **characterised in that** the wedge surface (17a) of the wedge (17), in contact with the outer covering portion (26b), has a roughness greater than that of the contact face (14a) of the counterface (14).

11. Assembly according to any one of the previous claims, **characterised in that** the wedge (17) includes a fold (17b) on its outer diameter allowing to cover the outer torus (25) on its outer diameter.

12. Assembly according to any one of the previous claims, **characterised in that** the contact face (14a) of the counterface (14) has a female conical shape.

13. Assembly according to any one of the previous claims, **characterised in that** metallic sealing joint (1) includes, on its surface, a deposit of added material, in particular gold and/or silver.

14. Assembly according to any one of the previous claims, **characterised in that** the metallic jacket (26) is a first metallic jacket (26) consisting of a material with a high mechanical strength, and **in that** the metallic sealing joint (1) includes a second metallic jacket wound onto the first metallic jacket and consisting of a material more ductile than that of the first metallic jacket (26), in particular silver, being intended to be plastically deformed during the crushing of the metallic sealing joint (1).

15. Assembly according to any one of the previous claims, **characterised in that** the counterface (14) consists of at least three parts rigidly connected together, comprising an inner block (11) provided with the contact face (14a) against which the metallic sealing joint (1) bears at the outer torus (25), a bellows (12) and an outer flange (13), the bellows (12) conferring a degree of axial liberty onto the assembly (30) to not block possible differential expansions, the bellows (12) connecting the inner block (11) and the outer flange (13), the outer flange (13) being fastened to the fixed frame (3).

16. Assembly according to any one of the previous claims, **characterised in that** the bonnet (15) consists of at least two parts, comprising an outer bonnet (43) fastened onto the fixed frame (3) and an inner bonnet (41) rigidly connected to the outer bonnet (43) via a screwed link (42).

17. Assembly according to claim 1, **characterised in that** the counterface (14) is a rotating part, rigidly connected to the rotating shaft (16) at the shoulder (7).
